# FASCICULE DE BREVET EUROPEEN

(11) **EP 3 167 379 B1**
(45) Date de publication et mention de la délivrance du brevet: **28.11.2018**
(21) Numéro de dépôt: 15753720.0
(22) Date de dépôt: 02.07.2015
(51) Int. Cl.: G06F 13/42

(54) **DISPOSITIF DE GESTION D'ERREURS SUR UN BUS UNIVERSEL SÉRIE**
FEHLERVERWALTUNGSGERÄT AUF EINEM UNIVERSELE SERIËLE BUS
ERROR MANAGEMENT DEVICE ON A UNIVERSAL SERIAL BUS

(30) Priorité: 11.07.2014 FR 1456750
(43) Date de publication de la demande: 17.05.2017
(73) Titulaire: PSA Automobiles SA, 78300 Poissy (FR)
(72) Inventeur: ADJADJ, Mehdi, F-95000 Cergy (FR); BOISSERIE, Antony, F-91320 Wissous (FR)
(74) Mandataire: Jeannin, Laurent Jean-Pierre
(86) Numéro de dépôt international: PCT/FR2015/051831
(87) Numéro de publication internationale: WO 2016/005683

(56) Documents cités:
- US-A1- 2003 110 319
- US-A1- 2005 120 146
- US-A1- 2010 049 881

## Description

L'invention concerne la transmission de données sur un bus série et plus particulièrement, la gestion d'erreurs lors d'une transmission.

Le bus universel en série (ou USB pour Universal Serial Bus en anglais) est un bus informatique en transmission série servant à connecter des périphériques informatiques (aussi appelé USB devices en anglais) à un ordinateur (aussi appelé hôte ou USB host en anglais).

L'USB est décliné en plusieurs versions permettant chacune de communiquer selon une pluralité de modes.

La première version du bus USB permet communiquer selon deux modes : un mode lent (ou « Low Speed » dont le débit est de 1,5 Mbit/s) ou un mode rapide (« Full Speed » dont le débit est de 12 Mbit/s) :
La deuxième version du bus USB comporte en outre un troisième mode (appelé « High Speed » dont le débit est de 480 Mbit/s).

Le bus USB fonctionne sur la base d'un anneau à jeton (ou Token Ring) avec lequel chaque noeud du réseau dispose successivement du bus.

La bande passante est partagée temporellement entre tous les périphériques connectés. Le temps est subdivisé en trames (frames) ou microtrames (microframes) pendant lesquels plusieurs transferts peuvent avoir lieu.

La communication entre l'hôte et les périphériques se fait selon un protocole basé sur l'interrogation successive de chaque périphérique par l'hôte. Lorsque l'hôte désire communiquer avec un périphérique, il émet un jeton (un paquet de données, contenant l'adresse du périphérique, codée sur sept bits) désignant un périphérique. Si le périphérique reconnait son adresse dans le jeton, il envoie un paquet de données en réponse.

L'USB définit différents types de transferts : le transfert de commande (pour l'énumération et la configuration des périphériques), le transfert d'interruption (utilisé pour fournir des informations de petite taille avec une latence faible) le transfert isochrone et le transfert en masse (pour transférer des informations volumineuses).

Il est possible de structurer la communication entre un hôte et un périphérique en plusieurs canaux logiques (pipes et endpoints) pour simplifier la commande du périphérique du port USB.

L'USB ne définit pas de moyen permettant de gérer facilement des erreurs de transmissions. Par exemple, avec une clé USB sur laquelle on trouve une bibliothèque musicale connectée à un lecteur, si un défaut physique fugitif intervient sur le faisceau (vibrations, chocs ou autre), le lecteur n'est plus en mesure de jouer la suite de la musique, qui s'arrête.

L'utilisateur est alors obligé de déconnecter la clé et de la reconnecter pour réinitialiser la communication, ou de redémarrer le lecteur de musique.

On connaît, par le document US2006/0236003, une méthode et un système pour contrôler une liaison USB. Cependant, cette solution ne permet pas de remédier à une erreur de transmission. Le document US2005/0120146 divulgue un équipement électronique comportant un contrôleur bote envoyant une commande et une adresse physique, utilisées pour transférer des blocs de données.

Le document US2003/0110319A1 divulgue aussi un contrôleur hôte USB communicant au moyen d'un transmetteur USB et d'un câble USB.

Aucun de ces documents ne mentionne une erreur de transmission. L'invention a donc pour but de remédier aux problèmes précités. Elle propose plus précisément à cet effet un équipement électronique comportant un contrôleur hôte apte à contrôler au moins un port de communication universel série, apte à être connecté à une pluralité de périphériques caractérisé en ce que chacun des périphériques connectés audit port est associé à un superviseur de périphérique, ledit superviseur de périphérique étant apte à déterminer et à signaler un défaut de communication entre le port et le périphérique auquel il est associé et en ce que le contrôleur hôte comporte des moyens de réinitialisation du port de communication lorsque tous les superviseurs de périphérique signalent un défaut de communication.

En cas d'échec de communication avec tous les périphériques, l'invention permet de désactiver le port USB pour avoir des gains en consommation électrique.

Avantageusement, les moyens de réinitialisation du port de communication sont un automate à états finis.

Avantageusement, l'automate à états finis comporte au moins trois états :
- un état d'initialisation correspondant à une initialisation de la communication entre l'hôte et un périphérique,
- un état nominal, correspondant à une communication avec un débit nominal entre l'hôte et le périphérique,
- un état erreur de périphérique, correspondant à un défaut de communication entre l'hôte et le périphérique.

Avantageusement, l'automate à états finis comporte en outre un état dégradé correspondant à une communication, entre l'hôte et le périphérique, avec un débit dégradé, inférieur au débit nominal.

En prévoyant un état dégradé, l'invention permet d'établir une communication en mode dégradé lorsque des défauts se produisent, plutôt que de perdre la communication.

Avantageusement, l'automate à états finis comporte en outre un état erreur correspondant à un défaut de communication entre l'hôte et tous les périphériques connectés à l'hôte.

Cette caractéristique permet de facilement mettre en oeuvre la désactivation du port USB en cas d'échec de communication avec tous les périphériques.

Avantageusement, l'automate à états finis passe d'un état nominal à un état dégradé suite à la détection d'un défaut de communication entre l'hôte et le périphérique.

Avantageusement, l'automate à états finis passe d'un état dégradé à un état erreur de périphérique suite à la détection d'un défaut de communication entre l'hôte et le périphérique.

Avantageusement, l'automate à états finis passe d'un état dégradé à un état nominal suite à la réalisation d'une première condition prédéterminée.

Ceci permet de rétablir une communication avec un débit dégradé vers un débit normalement, par exemple après un temps prédéfini passé en mode dégradé.

Avantageusement, l'automate à états finis passe d'un état erreur de périphérique à un état dégradé suite à la réalisation d'une deuxième condition prédéterminée.

Ceci permet de rétablir une communication interrompue avec un débit dégradé, par exemple après un temps prédéfini après l'interruption de la communication, sans intervention d'un utilisateur.

L'invention concerne aussi un véhicule comportant un dispositif selon l'invention.

D'autres caractéristiques et avantages de l'invention apparaîtront à l'examen de la description détaillée ci-après, et des dessins annexés, sur lesquels:
- la figure 1 montre une vue schématique d'un réseau ;
- la figure 2 montre une représentation d'un automate décrivant le fonctionnement d'un superviseur selon l'invention.

Les dessins annexés pourront non seulement servir à compléter l'invention, mais aussi contribuer à sa définition, le cas échéant.

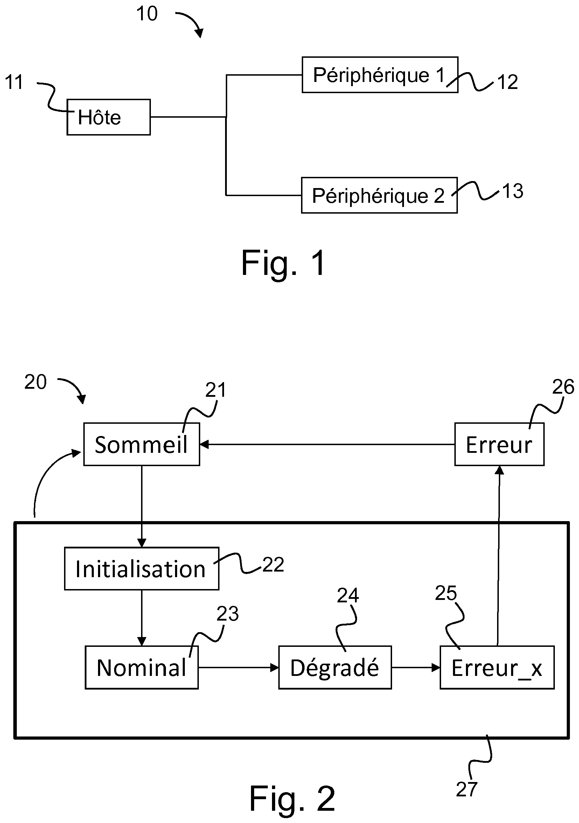

La figure 1 montre une vue schématique d'un réseau. Le réseau relie un calculateur hôte 11 à un premier périphérique 12 et à un deuxième périphérique 13 par l'intermédiaire d'une liaison USB.

Dans l'exemple, le nombre de périphériques est limité à deux. Mais on ne sort pas du cadre de l'invention en modifiant le nombre de périphériques du réseau.

Dans ce qui suit, on considère à titre d'exemple non limitatif que le calculateur hôte 11 est un calculateur de véhicule automobile. Mais l'invention n'est pas limitée à ce mode de réalisation. En effet, elle concerne tout calculateur comportant un connecteur USB et un contrôleur USB hôte.

Dans ce qui suit, on considère à titre d'exemple non limitatif que le premier périphérique 12 est aussi un calculateur de véhicule automobile. Mais l'invention n'est pas limitée à ce mode de réalisation. En effet, elle concerne tout calculateur comportant un connecteur USB et un contrôleur USB périphérique.

Le deuxième périphérique 13 est par exemple un périphérique de stockage (de type disque dur).

En référence à la figure 2, le superviseur 20 est un automate comportant les états suivants :
- « sommeil » 21 : couches basses USB non initialisées ;
- « initialisation » 22 : couches basses USB initialisées et en attente de la connexion d'un périphérique 12 ;
- « nominal » : communication USB fonctionnelle entre l'hôte 11 et le périphérique 12 au débit High Speed ;
- « dégradé »: communication USB fonctionnelle entre l'hôte 11 et le périphérique 12 au débit Full Speed ;
- « erreur_x » : communication avec le périphérique 12 désactivée ;
- « erreur » : communication avec tous les périphériques 12, 13 connectés au port USB de l'hôte 11 est désactivée. Le port USB est désactivé.

On rappelle que, généralement dans les modèles de communication, on distingue sept couches (la couche « physique », la couche « liaison de données », la couche « réseau », la couche « transport », la couche « session », la couche « présentation » et la couche « application »). Les trois premières couches sont appelées couches matérielles ou couches basses alors que les quatre dernières couches sont appelées couches hautes ou couches supérieures.

L'état « sommeil » 21 correspond à un réseau USB non fonctionnel. Le superviseur 20 du réseau USB est dans l'état « sommeil » 21 suite à une mise en tension de l'hôte 11.

Lorsque les couches logicielles supérieures ont besoin d'utiliser le réseau USB, le superviseur 20 commute dans l'état « initialisation » 22. Cet état correspond à une initialisation des couches basses du réseau USB.

Dès lors, le superviseur 20 se met en attente d'une connexion d'un périphérique 12 USB.

Lorsqu'un périphérique 12 USB est détecté, le superviseur 20 commute dans un état « nominal » 23.

A l'entrée dans l'état « nominal » 23, le superviseur 20 initialise la communication avec le périphérique 12 USB avec un débit nominal.

En cas d'échec, le superviseur 20 commute dans un état « dégradé » 24.

Par contre, si la communication est correctement établie avec le débit nominal, le superviseur 20 reste dans l'état « nominal » 23.

Si, alors que l'hôte 12 est dans l'état « nominal » 23, un défaut réseau survient (par exemple une perte de communication), le superviseur 20 réseau commute dans l'état « dégradé » 24.

Dans l'état « dégradé » 24, le superviseur 20 initialise la communication avec le périphérique 12 avec un débit dégradé.

En cas d'échec, il commute dans un état « erreur_x » 25.

Si la communication est correctement établie avec le débit dégradé, le périphérique 12 reste dans l'état « dégradé » 25.

Si, alors que l'hôte 11 est dans l'état « dégradé » 24, un défaut réseau survient (par exemple une perte de communication), le superviseur 20 réseau commute dans l'état « erreur_x » 25.

Dans l'état « erreur_x » 25, la connexion avec le périphérique 12 est désactivée, et plus aucune communication n'est possible entre l'hôte 11 et le périphérique 12.

Les états « initialisation », « nominal », « dégradé » et « erreur_x » sont regroupés dans un « sous-automate » 27 appelé superviseur de périphérique qui ne concerne qu'un seul périphérique.

Le superviseur réseau 20 doit implémenter autant d'états superviseur de périphérique 27 qu'il y a de périphériques connectés au port USB.

Lorsque tous les périphériques sont déclarés en « erreur_x » (autrement dit, lorsque que tous les superviseurs de périphérique 27 sont dans l'état « erreur_x » 25) le superviseur 20 commute dans l'état « erreur » 26. Dans cet état, l'hôte 11 désactive le port USB.

Dans une variante de réalisation de l'invention, lorsque le superviseur 20 commute dans l'état « erreur » 26, celui-ci réinitialise les couches basses USB puis commute dans l'état « initialisation » 22.

Lorsque les couches logicielles supérieures n'ont plus besoin d'utiliser le réseau USB, le superviseur 20 commute dans l'état « sommeil » 21, quel que soit l'état de la connexion entre l'hôte 11 et les périphériques 12,13.

Selon une variante de réalisation de l'invention, lorsque l'hôte 11 est dans l'état « dégradé » 24 et après la réalisation d'une condition (par exemple après l'écoulement d'un temps prédéfini), le superviseur 20 réseau commute dans l'état « nominal » 23.

Selon une variante de réalisation de l'invention, lorsque l'hôte 11 est dans l'état « erreur_x » et après la réalisation d'une condition (par exemple après l'écoulement d'un temps prédéfini), le superviseur 20 réseau commute dans l'état « dégradé » 24.

## Revendications

1. Equipement électronique comportant un contrôleur hôte (11) apte à contrôler au moins un port de communication universel série, apte à être connecté à une pluralité de périphériques (12, 13) **caractérisé en ce que** chacun des périphériques connectés (12,13) audit port est associé à un superviseur (27) de périphérique, ledit superviseur (27) de périphérique étant apte à déterminer et à signaler un défaut de communication entre le port et le périphérique auquel il est associé et **en ce que** le contrôleur hôte (11) comporte des moyens de réinitialisation du port de communication lorsque tous les superviseurs de périphérique signalent un défaut de communication.

2. Equipement électronique selon la revendication 1, **caractérisé en ce que** les moyens de réinitialisation du port de communication sont un automate (20) à états finis.

3. Equipement électronique selon la revendication 2, **caractérisé en ce que** l'automate (20) à états finis comporte au moins trois états :
- un état d'initialisation (22) correspondant à une initialisation de la communication entre l'hôte (11) et un périphérique (12),
- un état nominal (23), correspondant à une communication avec un débit nominal entre l'hôte (11) et le périphérique (12),
- un état erreur (25) de périphérique, correspondant à un défaut de communication entre l'hôte (11) et le périphérique (12).

4. Equipement électronique selon la revendication 3, **caractérisé en ce que** l'automate à états finis comporte en outre un état dégradé (24) correspondant à une communication, entre l'hôte (11) et le périphérique (12), avec un débit dégradé, inférieur au débit nominal.

5. Equipement électronique selon l'une des revendications 2 à 4, **caractérisé en ce que** l'automate (20) à états finis comporte en outre un état erreur (26) correspondant à un défaut de communication entre l'hôte (11) et tous les périphériques (12,13) connectés à l'hôte (11).

6. Equipement électronique selon l'une des revendications 4 ou 5, **caractérisé en ce que** l'automate (20) à états finis passe d'un état nominal (23) à un état dégradé (24) suite à la détection d'un défaut de communication entre l'hôte (11) et le périphérique.

7. Equipement électronique selon l'une des revendications 4 à 6, **caractérisé en ce que** l'automate (20) à états finis passe d'un état dégradé (24) à un état erreur (25) de périphérique suite à la détection d'un défaut de communication entre l'hôte (11) et le périphérique.

8. Equipement électronique selon l'une des revendications 4 ou 7, **caractérisé en ce que** l'automate (20) à états finis passe d'un état dégradé (24) à un état nominal (23) suite à la réalisation d'une première condition prédéterminée.

9. Equipement électronique selon l'une des revendications 4 à 8, **caractérisé en ce que** l'automate (20) à états finis passe d'un état erreur (25) de périphérique à un état dégradé (24) suite à la réalisation d'une deuxième condition prédéterminée.

10. Véhicule comportant un équipement électronique selon l'une des revendications précédentes.

## Patentansprüche

1. Elektronische Ausstattung, die eine Host-Steuervorrichtung (11) umfasst, die geeignet ist, um mindestens einen Universal-Serien-Kommunikationsport zu steuern, der geeignet ist, um mit einer Mehrzahl von Peripheriegeräten (12, 13) verbunden zu sein, **dadurch gekennzeichnet, dass** jedes der mit dem Port verbundenen Peripheriegeräte (12, 13) mit einem Peripheriegerätsupervisor (27) assoziiert ist, wobei der Peripheriegerätsupervisor (27) geeignet ist, einen Kommunikationsfehler zwischen dem Port und dem Peripheriegerät, mit dem er assoziiert ist, zu bestimmen und zu melden, und dass die Host-Steuervorrichtung (11) Mittel zum Reinitialisieren des Kommunikationsports, wenn alle Peripheriegerätsupervisoren einen Kommunikationsfehler melden, umfasst.

2. Elektronische Ausstattung nach Anspruch 1, **dadurch gekennzeichnet, dass** die Reinitialisierungsmittel des Kommunikationsports ein Automat (20) mit finiten Zuständen sind.

3. Elektronische Ausstattung nach Anspruch 2, **dadurch gekennzeichnet, dass** der Automat (20) mit finiten Zuständen mindestens drei Zustände umfasst:
- einen Initialisierungszustand (22), der einer Initialisierung der Kommunikation zwischen dem Host (11) und einem Peripheriegerät (12) entspricht,
- einen Nennzustand (23), der einer Kommunikation mit einem Nenndurchsatz zwischen dem Host (11) und dem Peripheriegerät (12) entspricht,
- einen Peripheriegerätfehlerzustand (25), der einem Kommunikationsfehler zwischen dem Host (11) und dem Peripheriegerät (12) entspricht.

4. Elektronische Ausstattung nach Anspruch 3, **dadurch gekennzeichnet, dass** der Automat mit finiten Zuständen außerdem einen Schadzustand (24) umfasst, der einer Kommunikation zwischen dem Host (11) und dem Peripheriegerät (12) mit einem beeinträchtigen Durchsatz, der geringer ist als der Nenndurchsatz, entspricht.

5. Elektronische Ausstattung nach einem der Ansprüche 2 bis 4, **dadurch gekennzeichnet, dass** der Automat (20) mit finiten Zuständen außerdem einen Fehlerzustand (26) umfasst, der einem Kommunikationsfehler zwischen dem Host (11) und allen Peripheriegeräten (12, 13), die mit dem Host (11) verbunden sind, entspricht.

6. Elektronische Ausstattung nach einem der Ansprüche 4 oder 5, **dadurch gekennzeichnet, dass** der Automat (20) mit finiten Zuständen von einem Nennzustand (23) auf einen Schadzustand (24) im Anschluss an das Erfassen eines Kommunikationsfehlers zwischen dem Host (11) und dem Peripheriegerät übergeht.

7. Elektronische Ausstattung nach einem der Ansprüche 4 bis 6, **dadurch gekennzeichnet, dass** der Automat (20) mit finiten Zuständen von einem Schadzustand (24) auf einen Peripheriegerätfehlerzustand (25) im Anschluss an das Erfassen eines Kommunikationsfehlers zwischen dem Host (11) und dem Peripheriegerät übergeht.

8. Elektronische Ausstattung nach einem der Ansprüche 4 oder 7, **dadurch gekennzeichnet, dass** der Automat (20) mit finiten Zuständen von einem Schadzustand (24) auf einen Nennzustand (23) im Anschluss an das Eintreten einer ersten vorbestimmten Bedingung übergeht.

9. Elektronische Ausstattung nach einem der Ansprüche 4 bis 8, **dadurch gekennzeichnet, dass** der Automat (20) mit finiten Zuständen von einem Peripheriegerätfehlerzustand (25) auf einen Schadzustand (24) im Anschluss an das Eintreten einer zweiten vorbestimmten Bedingung übergeht.

10. Fahrzeug, das eine elektronische Ausstattung nach einem der vorhergehenden Ansprüche umfasst.

## Claims

1. Electronic equipment comprising a host controller (11) able to control at least one universal serial communication port, able to be connected to a plurality of peripherals (12, 13), **characterized in that** each of the peripherals (12, 13) connected to said port is associated with a peripheral supervisor (27), said peripheral supervisor (27) being able to determine and to signal a communication defect between the port and the peripheral with which it is associated and **in that** the host controller (11) comprises means for re-initializing the communication port when all the peripheral supervisors signal a communication defect.

2. The electronic equipment according to claim 1, **characterized in that** the re-initialization means of the communication part are a finite state machine (20) .

3. The electronic equipment according to claim 2, **characterized in that** the finite state machine (20) comprises at least three states:
- an initialization state (22) corresponding to an initialization of the communication between the host (11) and a peripheral (12),
- a nominal state (23), corresponding to a communication with a nominal flow between the host (11) and the peripheral (12),
- a peripheral error state (25), corresponding to a communication defect between the host (11) and the peripheral (12).

4. The electronic equipment according to claim 3, **characterized in that** the finite state machine further comprises a degraded state (24) corresponding to a communication, between the host (11) and the peripheral (12), with a degraded flow, less than the nominal flow.

5. The electronic equipment according to one of claims 2 to 4, **characterized in that** the finite state machine (20) further comprises an error state (26) corresponding to a communication defect between the host (11) and all the peripherals (12, 13) connected to the host (11).

6. The electronic equipment according to one of claims 4 or 5, **characterized in that** the finite state machine (20) passes from a nominal state (23) to a degraded state (24) following the detection of a communication defect between the host (11) and the peripheral.

7. The electronic equipment according to one of claims 4 to 6, **characterized in that** the finite state machine (20) passes from a degraded state (24) to a peripheral error state (25) following the detection of a communication defect between the host (11) and the peripheral.

8. The electronic equipment according to one of claims 4 or 7, **characterized in that** the finite state machine (20) passes from a degraded state (24) to a nominal state (23) following the realization of a first predetermined condition.

9. The electronic equipment according to one of claims 4 to 8, **characterized in that** the finite state machine (20) passes from a peripheral error state (25) to a degraded state (24) following the realization of a second predetermined condition.

10. A vehicle comprising an electronic equipment according to one of the preceding claims.
